# FASCICULE DE BREVET EUROPEEN

(11) **EP 2 488 773 B1**
(45) Date de publication et mention de la délivrance du brevet: **20.11.2013**
(21) Numéro de dépôt: 10763665.6
(22) Date de dépôt: 29.09.2010
(51) Int. Cl.: F16H 25/22

(54) **VIS A ROULEAUX DIFFERENTIELLE**
DIFFERENZIALROLLENGEWINDETRIEB
DIFFERENTIAL ROLLER SCREW

(30) Priorité: 16.10.2009 FR 0904970
(43) Date de publication de la demande: 22.08.2012
(73) Titulaire: Thales, 92200 Neuilly Sur Seine (FR)
(72) Inventeur: BAUDASSE, Yannick, F-06130 Grasse (FR)
(74) Mandataire: Esselin, Sophie
(86) Numéro de dépôt international: PCT/EP2010/064490
(87) Numéro de publication internationale: WO 2011/045182

(56) Documents cités:
- EP-A1- 0 249 674
- DE-C1- 19 823 154
- FR-A1- 2 839 127
- JP-A- 2008 309 218
- US-B1- 6 318 516

## Description

La présente invention concerne le domaine des vis à roulements et plus particulièrement les vis à rouleaux. L'invention concerne le domaine des vis à rouleaux capables de supporter de très fortes charges tout en offrant une précision de réglage du mouvement en translation performante.

Les vis à rouleaux sont utilisées pour transformer des mouvements de rotation en déplacements linéaires et réciproquement. Les éléments de roulements sont des rouleaux filetés disposés entre une vis et un écrou. Les rouleaux sont espacés et sont compris dans un anneau cylindrique autour de la vis, ils sont également appelés "vis à rouleaux satellites".

Le grand nombre de points de contact permet généralement à la vis à rouleaux satellites de supporter de très fortes charges.

Actuellement, les vis à rouleaux sont préférées aux vis à billes dans certaines applications. Notamment, elles confèrent un avantage vis-à-vis des vis à billes lorsque les capacités de charge statique et dynamique admissibles sont plus élevées.

Les rouleaux filetés assurent la fonction de roulement à la place des billes, la charge est partagée par un plus grand nombre de points de contact.

En outre, la vis à rouleaux peut avoir des pas correspondant à des chiffres entiers ou à des nombres réels, ce qui est un avantage pour chiffrer la réduction des efforts et le calcul des distances en translation. Le choix du pas est libre, il peut être réalisé sans modification particulière de la géométrie de l'écrou ou de la vis.

Plusieurs types de vis à rouleaux existent. Notamment, on trouve des vis à rouleaux sans recirculation des rouleaux, des vis à rouleaux avec recirculation des rouleaux et d'autres aménagements tels que les vis à rouleaux inversés.

Une vis à rouleaux sans recirculation des rouleaux comprend un écrou qui possède un filetage intérieur identique à celui de la vis.

Les rouleaux possèdent un filetage à une entrée, dont l'angle d'hélice correspond à celui de l'écrou. Il ne se produit ainsi aucun déplacement axial entre l'écrou et les rouleaux. Une recirculation des rouleaux n'est donc pas nécessaire.

Une vis à rouleaux avec recirculation des rouleaux comprend un filet. L'écrou possède un filetage identique au filetage de la vis. Les rouleaux ne possèdent pas de filet, mais des gorges disposées perpendiculairement à l'axe de la vis. La distance entre les gorges correspond au pas apparent de la vis et de l'écrou.

Lors d'une rotation de la vis ou de l'écrou, les rouleaux se déplacent axialement dans l'écrou. Après un tour complet, chaque rouleau est ramené dans la position initiale par deux cames fixées aux extrémités de l'écrou. Cette recirculation des rouleaux est rendue possible par une rainure longitudinale dans l'écrou.

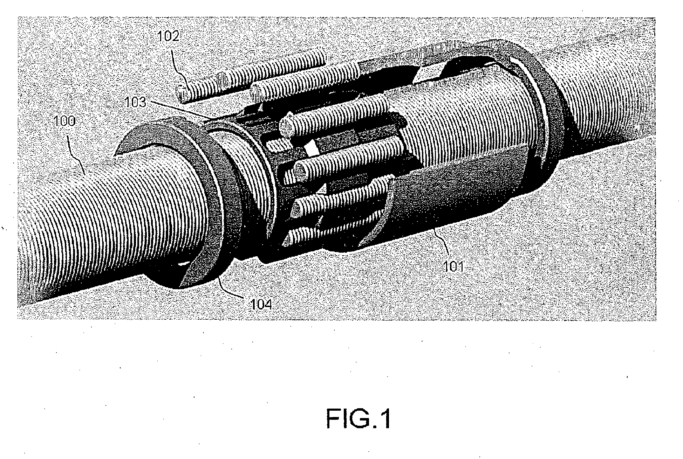

La figure 1 représente un cas de réalisation d'une telle vis à rouleaux. Une vis à rouleaux 100 comprend une pluralité de rouleaux 102 compris dans une structure 103 permettant d'assurer une bonne répartition des charges en maintenant un espacement entre les rouleaux et en assurant le contact d'une part entre les rouleaux 102 et la vis 100 et d'autre part entre les rouleaux 102 et l'écrou 101 qui possède un filetage intérieur. L'ensemble formé par la structure 103, les rouleaux 102 et l'écrou 101 est maintenu entre deux cames 104 permettant aux rouleaux de revenir dans leur position initiale après un tour complet.

Une vis à rouleaux inversés possède un filet. L'écrou possède un filetage identique au filetage de la vis. Le mouvement cinématique est inversé car dans ce cas, c'est l'écrou qui translate sous l'effet de rotation de la vis.

la On connait du document FR2839127, qui divulgue une vis à rouleaux différentielle selon le préambule de la revendication 1, une vis à recirculation différentielle comprenant un premier ensemble de rouleaux munis de gorges disposé dans un premier anneau cylindrique autour de la vis et un deuxième ensemble de rouleaux munis de gorges disposé dans un second anneau coaxial avec le premier anneau.

Aujourd'hui les capacités de réduction des vis sont limitées par la réalisation des pas. A titre d'exemple 0.5 mm est la précision en translation atteinte par les vis de l'art antérieur.

De plus, un besoin de forte réduction est incompatible d'une capacité de reprise d'une forte charge, car la section des filets est réduite. Cette incompatibilité oblige à augmenter fortement le diamètre de la vis, la longueur des rouleaux et leur nombre. Donc pour un roulement offrant une forte réduction et une capacité de reprise d'une forte charge, la vis à roulements devient encombrante.

Un but de l'invention est de pallier les inconvénients précités.

Notamment, l'invention permet d'augmenter la capacité de réduction d'une vis à rouleaux sans dégrader sa capacité de reprise de charge. Pour cela l'adjonction d'un deuxième étage travaillant en différentiel est nécessaire. Ce dernier étage permet de conserver un encombrement réduit, le diamètre de la vis n'étant pas augmenté.

L'invention permet donc un nouvel aménagement augmentant le rapport de réduction sans en dégrader les performances.

La vis à rouleaux différentielle comprend un écrou extérieur, des éléments de roulements comprenant un premier ensemble de rouleaux munis de premières gorges, le premier ensemble de rouleaux étant disposé dans un premier anneau cylindrique autour de la vis. Elle comprend en outre un second ensemble de rouleaux munis de deuxièmes gorges, le second ensemble de rouleaux étant disposé dans un second anneau cylindrique, les deux anneaux cylindriques étant coaxiaux. Un élément intermédiaire cylindrique est disposé entre les deux ensembles de rouleaux. L'élément intermédiaire comprend un premier filetage intérieur réalisé selon un premier pas et un premier sens et un second filetage extérieur réalisé selon un second pas et un second sens opposé au premier sens.

Avantageusement, les rouleaux sont filetés, les filetages étant formés par les premières et deuxièmes gorges.

Autrement dit, la vis à rouleaux différentielle comprend un écrou extérieur, des éléments de roulements comprenant un premier ensemble de rouleaux filetés, le filetage étant réalisé selon un premier pas et un premier sens, le premier ensemble étant disposé dans un premier anneau cylindrique autour de la vis.

Avantageusement, la vis comprend un second ensemble de rouleaux filetés, le filetage étant réalisé selon un second pas et un second sens opposé au premier sens, le second ensemble étant disposé dans un second anneau cylindrique, les deux anneaux cylindriques étant coaxiaux, et un élément intermédiaire cylindrique étant disposé entre les deux ensembles de rouleaux, l'élément intermédiaire comprenant un premier filetage intérieur correspondant au premier pas et un second filetage extérieur correspond au second pas.

Selon une autre caractéristique de l'invention, les premières et les deuxièmes gorges sont circulaires.

Avantageusement, dans un mode de réalisation la section des gorges des rouleaux est triangulaire.

Avantageusement, l'élément intermédiaire est entrainé en rotation par un moteur, l'élément intermédiaire effectuant un mouvement en translation selon le premier sens, l'écrou étant entrainé en translation dans le second sens, la vis étant fixe.

Avantageusement, l'élément intermédiaire est entrainé en rotation par un moteur, l'élément intermédiaire étant lié au moteur et assurant son guidage en rotation, l'élément intermédiaire effectuant un mouvement en translation selon le premier sens, la vis étant entrainée en translation dans le second sens, l'écrou étant fixe.

Avantageusement, l'écrou est un moyeu.

Avantageusement, les rouleaux sont à recirculation, les rouleaux comprenant une came et un doigt de blocage.

Avantageusement, les rouleaux comprennent deux parties circulaires filetées à chaque extrémité du rouleau, la partie centrale du rouleau ayant un rayon plus petit que les parties filetées.

D'autres caractéristiques et avantages de l'invention apparaîtront à l'aide de la description qui suit, faite en regard des dessins annexés qui représentent :
- la figure 1 : une vis à rouleaux de l'art antérieur comportant un étage de rouleaux ;
- la figure 2 : une vis différentielle selon l'invention comportant une pièce intermédiaire et deux étages de rouleaux ;
- la figure 3 : une première vue détaillé d'une vis différentielle de l'invention ;
- la figure 4 : une seconde vue détaillé d'une vis différentielle de l'invention;
- La figure 5 : une variante de réalisation d'une vis différentielle de l'invention.

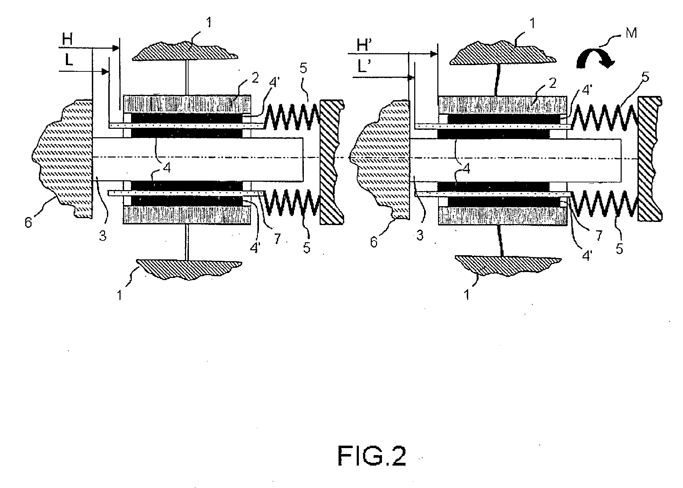

La figure 2 représente deux configurations d'une vis à rouleaux selon l'invention. La première configuration représente une vis à rouleaux dans un premier état, dit "état initial". La seconde configuration représente la vis à rouleaux lorsque le moteur M a généré une translation entre la vis et l'écrou, la vis à rouleaux est donc dans un second état, dit "état final".

Dans ces configurations, la vis 3 est fixe, c'est-à-dire bloquée en rotation et en translation à une partie fixe 6. L'écrou 2 est bloqué en rotation par une partie fixe en rotation 1 mais peut se déplacer en translation. Une pièce intermédiaire 7 est entrainée par un moteur M en rotation et peut se déplacer en translation.

Dans la première configuration, la vis 3 est fixée à une partie fixe 6. La pièce intermédiaire 7 est tubulaire et creuse, elle entoure la vis. La pièce intermédiaire 7 de l'invention est filetée sur son diamètre extérieur d'un pas P2 et taraudée sur son diamètre intérieur d'un pas P1 inversé au premier.

La pièce intermédiaire 7 est liée à la vis centrale par l'intermédiaire d'un premier ensemble de rouleaux périphériques 4 de pas P1 et à l'écrou extérieur 2 par un second ensemble de rouleaux périphériques 4' de pas P2.

Lorsque la pièce intermédiaire 7 est entraînée en rotation, elle se déplace d'un mouvement linéaire de P1/tour dans un premier sens dit sens négatif. L'écrou externe se déplace de P2/tour en sens inverse du premier sens, dit sens positif.

Le mouvement relatif de l'écrou par rapport à la vis est donc la somme des deux mouvements de translations qui sont opposés. Le mouvement de translation de l'écrou par rapport à la vis est donc fortement réduit car il résulte d'une différence de pas entre P1 et P2.

Une pièce 5 permet le passage de l'énergie motrice à la pièce intermédiaire 7.

La pièce intermédiaire 7, qui est originellement à une distance L de la pièce fixe 6, se translate sous l'impulsion du moteur M. La pièce intermédiaire 7 se déplace sur un tour et se situe à une nouvelle distance L'=L-P1 de la partie fixe 6.

L'écrou 2 qui est à une distance H de la pièce fixe 6 tourne sous l'impulsion de la rotation de la pièce intermédiaire par le biais des rouleaux 4'. Après un tour complet de la pièce intermédiaire 7, l'écrou est translaté, il se situe à une nouvelle distance H'= H+ P2-P1.

On a donc le différentiel de translation entre l'écrou et la vis qui est calculé après la rotation par la distance H'-H qui est égale à P2-P1.

L'invention permet de choisir une différence de pas entre P1 et P2 très faible en choisissant notamment des pas P1 et P2 proches. De ce fait, la précision du rapport de réduction est très nettement améliorée.

Un exemple de réalisation comprend une vis 3 de pas P1 égal à 1 mm et un écrou de pas intérieur de 0,9mm. Cette configuration permet d'obtenir une différence de pas de 0,1mm. C'est-à-dire que lorsque la pièce intermédiaire a réalisé un tour complet, la translation de l'écrou par rapport à la vis est de 0,1 mm.

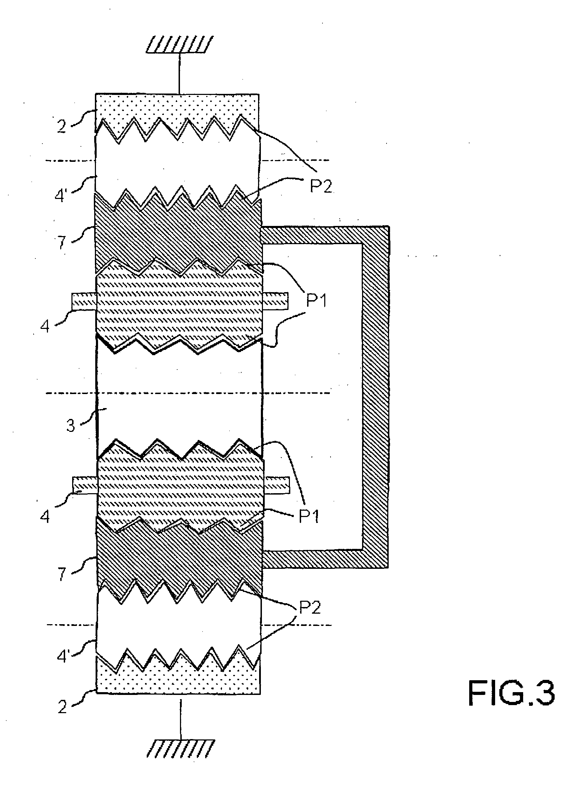

La figure 3 représente une coupe du dispositif de l'invention comprenant une vis 3, un premier ensemble de rouleaux périphériques 4 de pas P1 en contact d'une part avec la vis 3 et d'autre part avec une pièce intermédiaire 7 tubulaire et creuse comprenant un pas intérieur P1 et un pas extérieur P₂. Un second ensemble de rouleaux périphériques 4' est en contact d'une part avec la partie extérieure de la pièce intermédiaire 7 et d'autre part avec la partie intérieure d'un écrou 2.

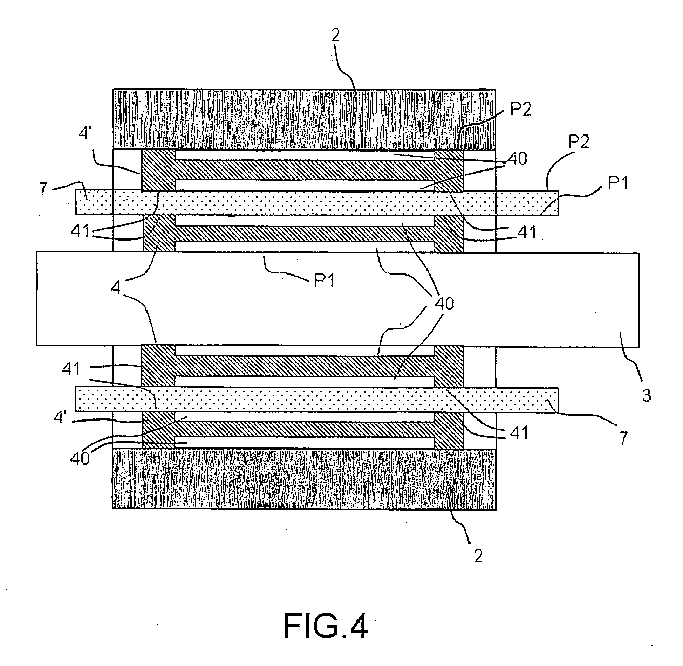

La figure 4 représente une coupe détaillée d'une variante de réalisation de la figure 2. Elle représente une vis 3 de pas P1, un premier ensemble de rouleaux périphériques 4 de pas P1, une pièce intermédiaire 7 comprenant un pas intérieur P1 et un pas extérieur P2, le second ensemble de rouleaux périphériques 4' de pas P2 et l'écrou 2 de pas intérieur P2.

Une variante représentée sur la figure 4 de l'utilisation des rouleaux comportant un diamètre moyen constant est l'utilisation de rouleaux comportant :
■ d'une part deux parties cylindriques 41 filetées en périphérie, ces parties ayant un premier diamètre moyen et une largeur prédéterminée et ;
■ d'autre part une partie centrale 40 creusée et non filetée dont le rayon est plus petit que celui des parties périphériques.

La partie centrale creusée 40 permet d'offrir une solution adaptée à des besoins de reprise de couple important. Cette géométrie permet de réduire le couple résistant dû au défaut des rouleaux de la vis.

Les parties périphériques sont en contact avec les autres pièces, notamment avec la pièce intermédiaire 7. En revanche la partie creusée n'est pas en contact avec la pièce intermédiaire 7.

Ces rouleaux permettent d'assurer un bon contact et une bonne transmission des efforts tout en maintenant une précision de déplacement en translation.

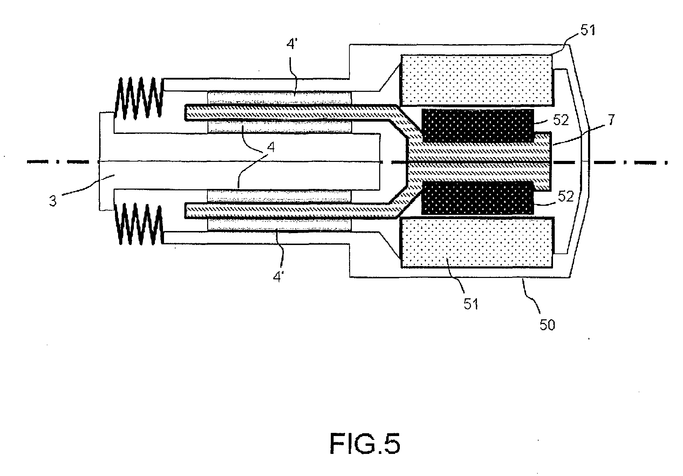

La figure 5 représente une variante réalisation de l'invention. Dans cette variante la vis 3 est libre en translation et fixe en rotation. L'écrou représenté par un moyeu 50 est fixe en rotation et en translation et la partie intermédiaire 7 est libre en rotation et en translation.

Le moteur comprend une partie fixe 51, le stator, liée au moyeu et une partie amovible 52, le rotor, qui entraine la partie intermédiaire 7 en rotation.

La vis 3 effectue un mouvement différentiel de P1-P2 sous l'effet du moteur. Le moyeu 50 étant fixe, le déplacement relatif de la vis par rapport au moyeu correspond à la différence de pas entre P1 et P2.

Dans les modes de réalisation décrits précédemment, les rouleaux sont filetés. Autrement dit, le premier ensemble de rouleaux est muni de premières gorges hélicoïdales, aussi appelées filets, engagées avec le premier filetage intérieur de la partie intermédiaire 7. Le deuxième ensemble de rouleaux est muni de deuxièmes gorges hélicoïdales, aussi appelées filets engagées avec le deuxième filetage extérieur de la partie intermédiaire 7.

En variante, les rouleaux ne sont pas filetés mais sont pourvus de gorges circulaires. Le premier ensemble de rouleaux comprend des premières gorges engagées avec le premier filetage intérieur de l'élément intermédiaire et le deuxième ensemble de rouleaux comprend des deuxièmes gorges engagées avec le deuxième filetage extérieur de l'élément intermédiaire. Les gorges sont perpendiculaires à l'axe de la vis, c'est-à-dire à l'axe des rouleaux. L'invention comporte de nombreux avantages. Notamment l'invention permet d'augmenter les capacités de tenue et de rigidité. En particulier, le gerbage est quasiment nul.

Un autre avantage est la grande capacité de réduction. L'invention permet également d'obtenir de grandes performances de tenue, de rigidité, de réduction et de capacité d'irréversibilité tout en maintenant un encombrement réduit du dispositif.

Enfin un dernier avantage est la possibilité de suppression des roulements par la présence de rouleaux. Cette voie permet de réaliser des vérins électriques ou des mécanismes complets sans aucun roulements.

## Revendications

1. Vis à rouleaux différentielle comprenant un écrou extérieur (2), des éléments de roulements comprenant un premier ensemble de rouleaux munis de premières gorges (4), le premier ensemble étant disposé dans un premier anneau cylindrique autour d'une vis (3), et un second ensemble de rouleaux munis de deuxièmes gorges (4'), le second ensemble étant disposé dans un second anneau cylindrique, les deux anneaux cylindriques étant coaxiaux, un élément intermédiaire cylindrique (7) étant disposé entre les deux ensembles de rouleaux (4, 4'), **caractérisée en ce que** l'élément intermédiaire (7) comprend un premier filetage intérieur réalisé selon un premier pas (P₁) et un premier sens et un second filetage extérieur réalisé selon un second pas (P₂) et un second sens opposé au premier sens.

2. Vis à rouleaux différentielle selon la revendication 1, **caractérisée en ce que** les rouleaux sont filetés, les filetages étant formés par les premières et deuxièmes gorges.

3. Vis à rouleaux différentielle selon la revendication 1, **caractérisée en ce que** les premières et les deuxièmes gorges sont circulaires.

4. Vis à rouleaux différentielle selon l'une quelconque des revendications 2 à 3, **caractérisée en ce que** la section des gorges des rouleaux est triangulaire.

5. Vis à rouleaux différentielle selon l'une quelconque des revendications 2 à 4, **caractérisée en ce que** l'élément intermédiaire (7) est entrainé en rotation par un moteur (M), l'élément intermédiaire (7) effectuant un mouvement en translation selon le premier sens, l'écrou (2) étant entrainé en translation dans le second sens, la vis (3) étant fixe.

6. Vis à rouleaux différentielle selon l'une quelconque des revendications 2 à 4, **caractérisée en ce que** l'élément intermédiaire (7) est entrainé en rotation par un moteur (M), l'élément intermédiaire étant lié au moteur (M) et assurant son guidage en rotation, l'élément intermédiaire (7) effectuant un mouvement en translation selon le premier sens, la vis (3) étant entrainée en translation dans le second sens, l'écrou (2) étant fixe.

7. Vis à rouleaux différentielle selon l'une quélconque des revendications 1, 5 et 6, **caractérisée en ce que** l'écrou est un moyeu (50)

8. Vis à rouleaux différentielle selon l'une quelconque des revendications 1, 5 et 6, **caractérisée en ce que** les rouleaux (4, 4') sont à recirculation, les rouleaux (4, 4') comprenant une came et un doigt de blocage.

9. Vis à rouleaux différentielle selon l'une des revendications 1, 5 et 6, **caractérisée en ce que** les rouleaux comprennent deux parties circulaires filetées (41) à chacune de leurs extrémités, la partie centrale (40) des rouleaux ayant un rayon plus petit que les parties filetées.

10. Vis à rouleaux différentielle selon l'une quelconque des revendications précédentes, **caractérisée en ce que** la pièce intermédiaire (7) est liée à la vis centrale (3) par l'intermédiaire du premier ensemble de rouleaux périphériques (4) et à l'écrou extérieur (2) par l'intermédiaire du deuxième ensemble de rouleaux périphériques (4').

11. Vis à rouleaux différentielle selon l'une quelconque des revendications précédentes, dans laquelle le premier pas (P1) est différent du deuxième pas (P2).

## Patentansprüche

1. Differentialrollengewindetrieb, der Folgendes umfasst: eine äußere Mutter (2), Lagerelemente mit einem ersten Satz Rollen, die mit ersten Nuten (4) versehen sind, wobei der erste Satz in einem ersten zylindrischen Ring um eine Schraube (3) angeordnet ist, und einem zweiten Satz Rollen, die mit zweiten Nuten (4') versehen sind, wobei der zweite Satz in einem zweiten zylindrischen Ring angeordnet ist, wobei die beiden zylindrischen Ringe koaxial sind, wobei ein zylindrisches Zwischenelement (7) zwischen den beiden Rollensätzen (4, 4') angeordnet ist, **dadurch gekennzeichnet, dass** das Zwischenelement (7) ein erstes Innengewinde mit einer ersten Steigung (P1) und einer ersten Richtung und ein zweites Außengewinde mit einer zweiten Steigung (P2) und einer zweiten Richtung entgegengesetzt zur ersten Richtung aufweist.

2. Differentialrollengewindetrieb nach Anspruch 1, **dadurch gekennzeichnet, dass** die Rollen ein Gewinde aufweisen, wobei die Gewinde von den ersten und zweiten Nuten gebildet werden.

3. Differentialrollengewindetrieb nach Anspruch 1, **dadurch gekennzeichnet, dass** die ersten und zweiten Nuten kreisförmig sind.

4. Differentialrollengewindetrieb nach einem der Ansprüche 2 bis 3, **dadurch gekennzeichnet, dass** der Querschnitt der Rollennuten dreieckig ist.

5. Differentialrollengewindetrieb nach einem der Ansprüche 2 bis 4, **dadurch gekennzeichnet, dass** das Zwischenelement (7) von einem Motor (M) in Drehung versetzt wird, wobei sich das Zwischenelement (7) translational in der ersten Richtung bewegt, wobei die Mutter (2) translational in der zweiten Richtung angetrieben wird und wobei die Schraube (3) fest ist.

6. Differentialrollengewindetrieb nach einem der Ansprüche 2 bis 4, **dadurch gekennzeichnet, dass** das Zwischenelement (7) von einem Motor (M) in Drehung versetzt wird, wobei das Zwischenelement mit dem Motor (M) verbunden ist und seine Drehführung gewährleistet, wobei sich das Zwischenelement (7) translational in der ersten Richtung bewegt, wobei die Schraube (3) translational in der zweiten Richtung angetrieben wird und wobei die Mutter (2) fest ist.

7. Differentialrollengewindetrieb nach einem der Ansprüche 1, 5 und 6, **dadurch gekennzeichnet, dass** die Mutter eine Nabe (50) ist.

8. Differentialrollengewindetrieb nach einem der Ansprüche 1, 5 und 6, **dadurch gekennzeichnet, dass** die Rollen (4, 4') Umlaufrollen sind, wobei die Rollen (4, 4') eine Nocke und einen Sperrfinger aufweisen.

9. Differentialrollengewindetrieb nach einem der Ansprüche 1, 5 und 6, **dadurch gekennzeichnet, dass** die Rollen zwei kreisförmige Gewindeteile (41) jeweils an ihren Enden aufweisen, wobei der mittlere Teil (40) der Rollen einen kleineren Radius hat als die Gewindeteile.

10. Differentialrollengewindetrieb nach einem der vorherigen Ansprüche, **dadurch gekennzeichnet, dass** der Zwischenteil (7) mittels des ersten Satzes von peripheren Rollen (4) mit der mittleren Schraube (3) und mittels des zweiten Satzes von peripheren Rollen (4') mit der äußeren Mutter (2) verbunden ist.

11. Differentialrollengewindetrieb nach einem der vorherigen Ansprüche, wobei sich die erste Steigung (P1) von der zweiten Steigung (P2) unterscheidet.

## Claims

1. A differential roller screw comprising an outer nut (2), bearing elements comprising a first set of rollers provided with first grooves (4), said first set being disposed in a first cylindrical ring around a screw (3), and a second set of rollers provided with second grooves (4'), said second set being disposed in a second cylindrical ring, the two cylindrical rings being coaxial, with an intermediate cylindrical element (7) being disposed between the two sets of rollers (4, 4'), **characterised in that** said intermediate element (7) comprises a first internal thread produced with a first pitch (P1) and a first direction and a second external thread produced with a second pitch (P2) and a second direction opposite the first direction.

2. The differential roller screw according to claim 1, **characterised in that** the rollers are threaded, with the threads being formed by the first and second grooves.

3. The differential roller screw according to claim 1, **characterised in that** the first and second grooves are circular.

4. The differential roller screw according to any one of claims 2 to 3, **characterised in that** the cross-section of the roller grooves is triangular.

5. The differential roller screw according to any one of claims 2 to 4, **characterised in that** said intermediate element (7) is entrained in rotation by a motor (M), with said intermediate element (7) translationally moving along the first direction, the nut (2) being entrained in translation in the second direction and the screw (3) being fixed.

6. The differential roller screw according to any one of claims 2 to 4, **characterised in that** said intermediate element (7) is entrained in rotation by a motor (M), with said intermediate element being connected to said motor (M) and providing its rotational guidance, with said intermediate element (7) translationally moving along the first direction, the screw (3) being entrained in translation in the second direction and the nut (2) being fixed.

7. The differential roller screw according to any one of claims 1, 5 and 6, **characterised in that** the nut is a hub (50).

8. The differential roller screw according to any one of claims 1, 5 and 6, **characterised in that** the rollers (4, 4') are recirculating rollers, said rollers (4, 4') comprising a cam and a blocking finger.

9. The differential roller screw according to any one of claims 1, 5 and 6, **characterised in that** the rollers comprise two threaded circular parts (41) on each of its ends, the central part (40) of the rollers having a smaller radius than the threaded parts.

10. The differential roller screw according to any one of the preceding claims, **characterised in that** said intermediate part (7) is connected to said central screw (3) by means of said first set of peripheral rollers (4) and to said outer nut (2) by means of said second set of peripheral rollers (4').

11. The differential roller screw according to any one of the preceding claims, wherein said first pitch (P1) differs from said second pitch (P2).
